# EUROPEAN PATENT APPLICATION

(11) **EP 4 579 895 A1**
(43) Date of publication of application: **02.07.2025**
(21) Application number: 24206671.0
(22) Date of filing: 15.10.2024
(51) Int. Cl.: H01M 50/107, H01M 50/533, H01M 50/54

(54) **CYLINDRICAL BATTERY**

(30) Priority: 27.12.2023 CN 202323604849 U
(71) Applicant: Eve Energy Co., Ltd., Huizhou, Guangdong 516006 (CN)
(72) Inventor: ZHOU, Hongquan, Huizhou, Guangdong, 516006 (CN)
(74) Representative: Herrero & Asociados, S.L.

(57) **Abstract**

A cylindrical battery is provided. The cylindrical battery includes includes a plurality of positive electrode sheets and a plurality of negative electrode sheets. The plurality of positive electrode sheets and the plurality of negative electrode sheets are alternately stacked along a height direction of the cylindrical battery, with a diaphragm provided between every two adjacent positive electrode sheet and negative electrode sheet. The cylindrical battery further includes a positive electrode current collecting column. The positive electrode current collecting column penetrates the plurality of positive electrode sheets, the plurality of negative electrode sheets and the plurality of diaphragms along an axial direction of the cylindrical battery. The positive electrode sheets are electrically coupled to the positive electrode current collecting column. The positive electrode current collecting column is electrically coupled to a top cover. The negative electrode sheets are electrically coupled to a housing.

## Description

### TECHNICAL FIELD

The present disclosure relates to the technology field of batteries, and in particular, to a cylindrical battery.

### BACKGROUND

With rapid development of new energy vehicles, the industry has higher and higher requirements on the energy density, safety and low cost of the battery.

In related technologies, a cylindrical battery is formed by stacking positive electrode sheets, negative electrode sheets and diaphragms together, and then wounding them into a roll core by means of a winding device, and then assembling the roll core into a cylindrical housing.

In related technologies, due to the requirement of starting space of the roll core, a lot of space in the center of the roll core is wasted, resulting in a low volume utilization rate of the battery.

### SUMMARY

The present disclosure provides a cylindrical battery including a plurality of positive electrode sheets and a plurality of negative electrode sheets. The plurality of positive electrode sheets and the plurality of negative electrode sheets are alternately stacked along a height direction of the cylindrical battery, with a diaphragm provided between every two adjacent positive electrode sheet and negative electrode sheet. The cylindrical battery further includes a positive electrode current collecting column. The positive electrode current collecting column penetrates the plurality of positive electrode sheets, the plurality of negative electrode sheets and the plurality of diaphragms along an axial direction of the cylindrical battery. The positive electrode sheets are electrically coupled to the positive electrode current collecting column. The positive electrode current collecting column is electrically coupled to a top cover. The negative electrode sheets are electrically coupled to a housing.

The cylinder battery provided in the present disclosure has the following beneficial effects: the battery cell is formed by stacking the positive electrode sheet, the diaphragm, the negative electrode sheet, and the diaphragm in sequence. The positive electrode current collecting column passes through the battery cell along the axis of the battery cell and is electrically coupled to the positive electrode sheets. The positive electrode current collecting column is further electrically coupled to the top cover. The negative electrode sheets are electrically coupled to the housing, so that a wasted central space in the battery cell in related technologies is filled with the positive electrode current collecting column. Furthermore, all the stacked positive electrode sheets are connected to the positive electrode current collecting column, and are led out by means of the connection between the positive electrode current collecting column and the top cover, so as to form a positive electrode of a battery; all the stacked negative electrode sheets are led out through the housing , so as to form a negative electrode of the battery, thereby avoiding wasting the central space of the battery cell, and greatly improving the utilization rate of the internal space of the battery.

### BRIEF DESCRIPTION OF THE DRAWINGS

FIG. 1 is a schematic diagram of an overall structure of a cylindrical battery according to some embodiments.
FIG. 2 is a cross-sectional structural diagram taken along a line B-B shown in FIG. 1.
FIG. 3 is a schematic structural diagram of the cylindrical battery with a housing and a top cover hidden according to some embodiments.
FIG. 4 is a schematic structural diagram of a positive electrode sheet according to some embodiments.
FIG. 5 is a schematic structural diagram of a negative electrode sheet according to some embodiments.
FIG 6 is a schematic structural diagram of a positive electrode current collecting column according to some embodiments.

Reference numbers in the drawings:
100, cylindrical battery; 1, battery cell; 10, through hole; 101, receiving groove; 11, positive electrode sheet; 110, positive electrode tab portion; 111, positive electrode tab; 12, negative electrode sheet; 120, negative electrode tab portion; 121, negative electrode tab; 13, diaphragm; 2, housing; 21, insulating pad; 3, positive electrode current collecting column; 31, reinforcing rib; 4, top cover.

### DETAILED DESCRIPTION

In related technologies, a cylindrical battery is formed by stacking positive electrode sheets, negative electrode sheets and diaphragms together, and then wounding them into a roll core by means of a winding device, and then assembling the roll core into a cylindrical housing. Due to the requirement of starting space of the roll core, a lot of space in the central of the roll core is wasted, resulting in a low volume utilization rate of the battery. At the same time, the positive electrode tabs are welded to a collecting column, and the negative electrode tabs are welded to another collecting column, resulting in low assembly efficiency. At the same time, there are welding debris and dust, leading to a large self-discharge and even safety accidents such as an internal short circuit.

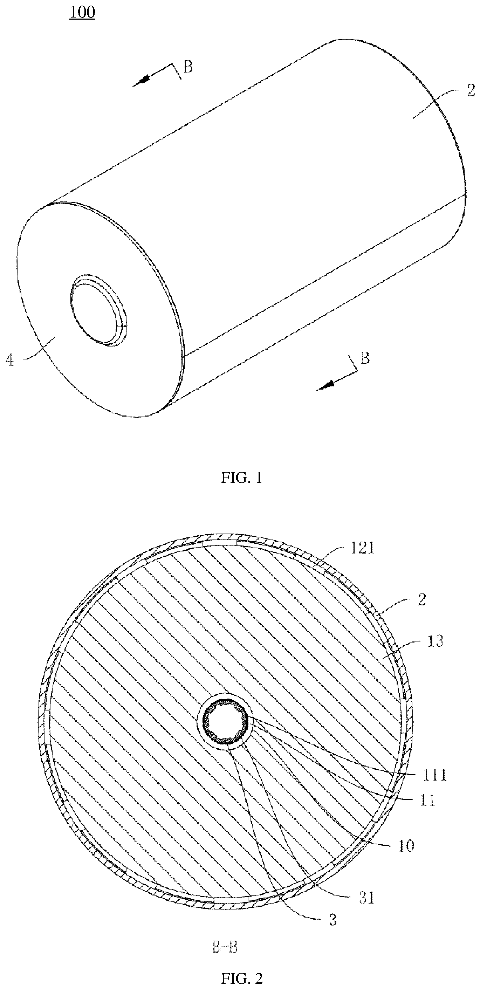

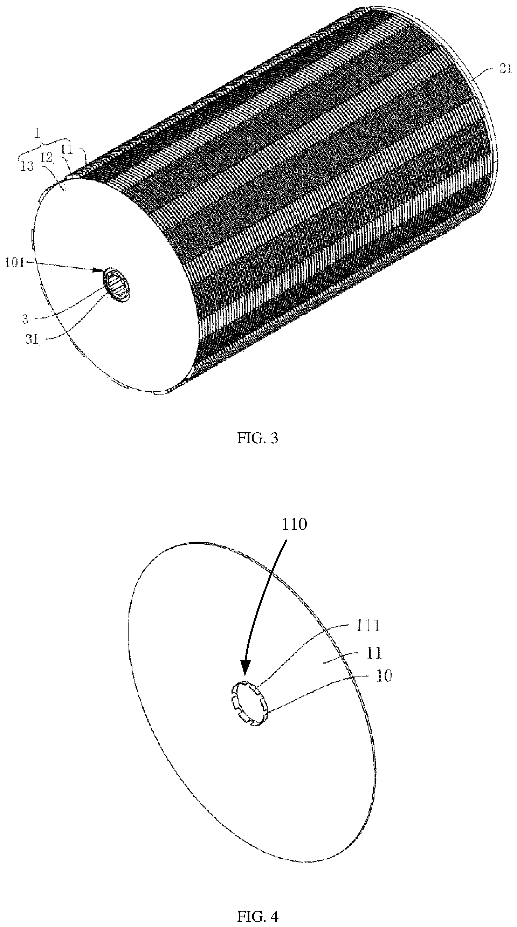

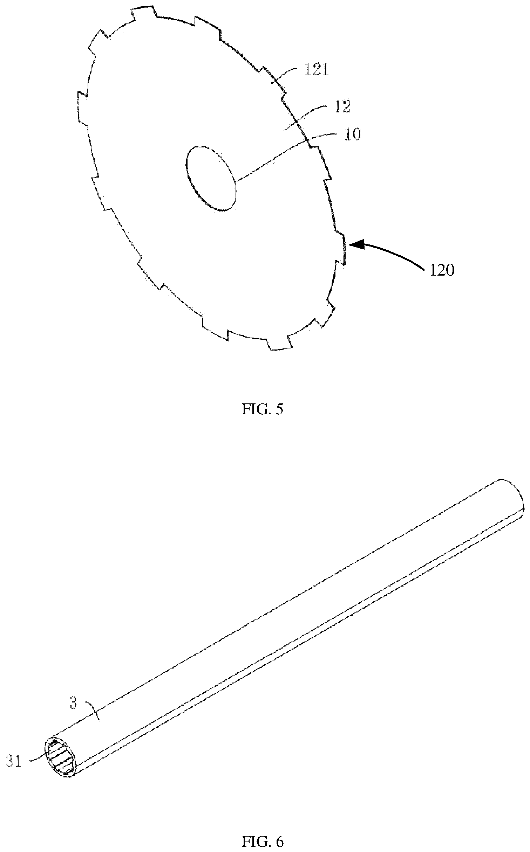

Therefore, as shown in FIG. 1 to FIG. 6, some embodiments of the present disclosure provides a cylindrical battery 100. The cylindrical battery 100 includes a battery cell 1, a housing 2 and a top cover 4. The battery cell 1 is housed in the housing 2, and the top cover 4 is connected to an opening end of the housing, so as to seal the battery cell 1 in the housing. The battery cell 1 of this embodiment adopts a stacked structure. Specifically, the battery cell 1 includes a plurality of positive electrode sheets 11 (as shown in FIG. 4) and a plurality of negative electrode sheets 12 (as shown in FIG. 5). The plurality of positive electrode sheets 11 and the plurality of negative electrode sheets 12 are alternately stacked along a height direction of the cylindrical battery 100. The battery cell 1 further includes a plurality of diaphragm 13. The diaphragm 13 is provided between every two adjacent positive electrode sheet 11 and negative electrode sheet 12. Each of the positive electrode sheets 11, the negative electrode sheets 12, and the diaphragms 13 is provided with a through hole 10 extending along an axial direction of the battery cell 1. After stacking, the through holes 10 of the positive electrode sheets 11, the through holes 10 of the negative electrode sheets 12 and the through holes 10 of the diaphragms 13 form a receiving groove 101 (as shown in FIG. 3). In this embodiment, an outer diameter of the cylindrical battery 100 is r, the height of the cylindrical battery 100 is h, satisfying a requirement of 52mm<r<84mm, 120mm<h<200mm. For example, the outer diameter r of the housing 2 may be 54 mm, 58 mm, 60 mm, 64 mm, 68 mm, 70 mm, 74 mm, 78 mm, 80 mm, etc., and the height of the cylindrical battery 100 may be 140 mm, 160 mm, 180 mm, etc.

It should be noted that the receiving groove 101 in this embodiment is similar to the wasted central space in the roll core in related technologies.

In some embodiments, in order to make reasonable use of the space of the receiving groove 101 and reduce the space waste, the cylindrical battery 100 further includes negative electrode tab portions 120, a positive electrode current collecting column 3, and positive electrode tab portions 110. The negative electrode tab portion 120 is provided on an outer peripheral edge of the negative electrode sheet 12 and is in contact with an inner wall of the housing 2. The positive electrode current collecting column 3 is provided in the receiving groove 101. The positive electrode tab portion 110 is provided on an inner circumferential wall of the through hole 10 on the positive electrode sheet 11 and is in contact with an outer circumferential wall of the positive electrode current collecting column 3. The top cover 4 is provided at an open end of the housing 2 and is connected to the positive electrode current collecting column 3.

During a process of forming the cylindrical battery 100, firstly, forming the negative electrode tab portion 120 on the outer peripheral edge of the negative electrode sheet 12, and forming the positive electrode tab portion 110 on an inner circumferential wall of the through hole 10 on the positive electrode sheet 11; then, replacing the method of winding and forming a roll core in related technology, with the method of stacking and forming the battery cell 1 in the present disclosure; then, making the negative electrode tab portion 120 be in contact with the inner wall of the housing 2, thereby forming a negative electrode of a battery via the housing 2; adding the positive electrode current collecting column 3 into the receiving groove 101 of the battery cell 1 formed by stacking the through holes 10 of the positive electrode sheets 11, the through holes 10 of the negative electrode sheets 12 and the through holes 10 of the diaphragms 13; making the positive electrode tab portion 110 be in contact with the positive electrode current collecting column 3, and making the positive electrode current collecting column 3 be connected to the top cover 4, thereby forming a positive electrode of the battery. In this way, the space of the receiving groove 101 is reasonably and fully utilized, so that the waste of the inner space of the housing 2 is avoided, and the energy density of the battery is improved. During assembly, the negative electrode tab portion 120 is kept in contact with the housing 2, and the positive electrode tab portion 110 is kept in contact with the positive electrode current collecting column 3, so that assembly efficiency is higher, without welding connection, and the safety of the cylindrical battery 100 is greatly improved.

Specifically, as shown in FIG. 5, the negative electrode tab portion 120 includes a plurality of negative electrode tabs 121. The plurality of negative electrode tabs 121 are provided on the outer peripheral edge of the negative electrode sheet 12, and arranged at intervals along a circumferential direction of the negative electrode sheet 12. The negative electrode tabs 121 are in the same plane as the negative electrode sheet 12, and an end of the negative electrode tab 121 away from the negative electrode sheet 12 is in contact with the housing 2. The negative electrode tab 121 in this embodiment is formed in a fan shape, so that an outer arc surface of the negative electrode tab 121 matches and closely fits an inner circumferential wall of the housing 2 having a cylindrical shape, thereby ensuring a tight connection between the two without welding, and having good reliability. The negative electrode tabs 121 are arranged at equal intervals, so as to make an output of the cylindrical battery stable. The negative electrode tab portion 120 is integrally formed on the negative electrode sheet 12, so that the overall integrity is great.

As shown in FIG. 4, the positive electrode tab portion 110 includes a plurality of positive electrode tabs 111. The plurality of positive electrode tabs 111 are provided on the inner circumferential wall of the through hole 10 on the positive electrode sheet 11, and arranged at intervals along a circumferential direction of the positive electrode sheet 11. The positive electrode tabs 111 are bent with respect to the positive electrode sheet 11 and are in contact with the positive electrode current collecting column 3. The positive electrode tab 111 in this embodiment is formed in an arc-shaped, and an inner arc surface of the positive electrode tab 111 is coplanar with the through hole 10 of the positive electrode sheet 11. The inner arc surface of the positive electrode tab 111 matches with and closely fits the outer circumferential wall of the positive electrode current collecting column 3, thereby ensuring a tight connection between the two without welding, and ensuring that the stacked positive electrode sheets 11, negative electrode sheets 12, and diaphragms 13 are all located on the same axis, thereby reducing the deviation of housing the battery cell 1 into the housing, so as to facilitate subsequent house-in operation. The positive electrode tabs 111 are arranged at equal intervals, so as to make an output of the cylindrical battery 100 more stable. The positive electrode tab portion 110 is integrally formed on the positive electrode sheet 11, so that the overall integrity is better.

In order to facilitate the stacking of the positive electrode sheets 11, the diaphragms 13 and the negative electrode sheets 12, a diameter of the through hole 10 on the positive electrode sheet 11 is smaller than that of the through hole 10 on the negative electrode sheet 12, a diameter of the through hole 10 on the positive electrode sheet 11 is also smaller than that of the through hole 10 on the diaphragm 13, so as to ensure that the bent positive electrode tab 111 can smoothly pass through the through hole 10 on the negative electrode sheet 12 and the through hole 10 on the diaphragm 13 during a stacking process, so as to facilitate assembly. At the same time, a gap exists between the through hole 10 on the negative electrode sheet 12 and the positive electrode current collecting column 3, thereby avoiding interference between the two, and ensuring the stability of the cylindrical battery 100.

In this embodiment, as shown in FIG. 6, the positive electrode current collecting column 3 is formed in a hollow structure with openings at two ends. An inner wall of the positive electrode current collecting column 3 is provided with a plurality of reinforcing ribs 31 along a circumferential direction of the positive electrode current collecting column 3. The reinforcing ribs 31 extend along an axial direction of the positive electrode current collecting column 3. The arrangement of the reinforcing ribs 31 enhances the overall strength of the positive electrode current collecting column 3, the battery cell 1 and even the cylindrical battery 100. Before assembling the battery cell 1 as a whole into the housing 2, an inner bottom wall of the housing 2 is provided with an insulating pad 21, and then the battery cell 1 is assembled into the housing 2. The insulating pad 21 can isolate the positive electrode current collecting column 3 from the housing 2, thereby avoiding interference between the positive electrode current collecting column 3 and the housing 2, and avoiding occurrence of short circuit. Finally, the top cover 4 is welded to the positive electrode current collecting column 3 and an edge of the open end of the housing 2, so as to achieve a tight sealing of the battery cell 1.

## Claims

1. A cylindrical battery (100), comprising:
a housing (2);
a battery cell (1) housed in the housing (2); and
a top cover (4) connected to an opening end of the housing (2); wherein the top cover (4) is configured to seal the battery cell (1) in the housing (2);
wherein the battery cell (1) comprises:
a plurality of positive electrode sheets (11) and a plurality of negative electrode sheets (12) alternately stacked along a height direction of the cylindrical battery (100);
a plurality of diaphragms (13), wherein the diaphragm (13) is provided between every two adjacent positive electrode sheet (11) and negative electrode sheet (12);
a positive electrode current collecting column (3); wherein the positive electrode current collecting column (3) penetrates the plurality of positive electrode sheets (11), the plurality of negative electrode sheets (12) and the plurality of diaphragms (13) along an axial direction of the cylindrical battery (100); the positive electrode sheets (11) are electrically coupled to the positive electrode current collecting column (3); the positive electrode current collecting column (3) is electrically coupled to the top cover (4); the negative electrode sheets (12) are electrically coupled to the housing (2).

2. The cylindrical battery (100) according to claim 1, wherein each of the positive electrode sheets (11), the negative electrode sheets (12), and the diaphragms (13) is provided with a through hole (10) extending along the axial direction of the battery cell (1);
wherein the through holes (10) on the positive electrode sheets (11), the through holes (10) on the negative electrode sheets (12) and the through holes (10) on the diaphragms (13) are stacked together to form a receiving groove (10); wherein the positive electrode current collecting column (3) is provided in the receiving groove (101).

3. The cylindrical battery (100) according to claim 2, wherein an outer peripheral edge of the negative electrode sheets (12) is provided with a plurality of negative electrode tabs (121); wherein the plurality of negative electrode tabs (121) are arranged at intervals along a circumferential direction of the negative electrode sheets (12); the negative electrode tabs (121) are in the same plane as the negative electrode sheet (12), and one end of the negative electrode tab (121) away from the negative electrode sheet (12) is in contact with the housing (2).

4. The cylindrical battery (100) according to claim 3, wherein the negative electrode tab (121) is formed in a fan shape, so that an outer arc surface of the negative electrode tab (121) matches and closely fits an inner circumferential wall of the housing (2) having a cylindrical shape.

5. The cylindrical battery (100) according to claim 3, wherein an inner circumferential wall of the through hole (10) on the positive electrode sheet (11) is provided with a plurality of positive electrode tabs (111); wherein the plurality of positive electrode tabs (111) are arranged at intervals along a circumferential direction of the positive electrode sheet (11), and the positive electrode tabs (111) are bent with respect to the positive electrode sheet (11) and are in contact with the positive electrode current collecting column (3).

6. The cylindrical battery (100) according to claim 5, wherein a diameter of the through hole (10) on the negative electrode sheet (12) is larger than that of the through hole (10) on the positive electrode sheet (11); a diameter of the through hole (10) on the diaphragm (13) is larger than that of the through hole (10) on the positive electrode sheet (11).

7. The cylindrical battery (100) according to claim 5, wherein the positive electrode tabs (111) are integrally formed on the positive electrode sheet (11);
the negative electrode tabs (121) are integrally formed on the negative electrode sheet (12).

8. The cylindrical battery (100) according to claim 5, wherein the positive electrode tabs (111) are arranged at equal intervals;
the negative electrode tabs (121) are arranged at equal intervals.

9. The cylindrical battery (100) according to any one of claims 1 to 8, wherein the positive electrode current collecting column (3) is formed in a hollow structure with openings at two ends.

10. The cylindrical battery (100) according to claim 9, wherein an inner wall of the positive electrode current collecting column (3) is provided with a plurality of reinforcing ribs (31); wherein the reinforcing ribs (31) are arranged along a circumferential direction of the positive electrode current collecting column (3), and the reinforcing ribs (31) extend along the axial direction of the positive electrode current collecting column (3).

11. The cylindrical battery (100) according to any one of claims 1 to 8, wherein the top cover (4) is welded to the positive electrode current collecting column (3).

12. The cylindrical battery (100) according to any one of claims 1 to 8, wherein an inner bottom wall of the housing (2) is provided with an insulation pad (21).
